# EUROPEAN PATENT APPLICATION

(11) **EP 1 202 588 A1**
(43) Date of publication of application: **02.05.2002**
(21) Application number: 00402924.5
(22) Date of filing: 23.10.2000
(51) Int. Cl.: H04Q 7/38, H04Q 7/32

(54) **System for managing a user profile in a radiocommunication system**

(71) Applicant: ALCATEL, 75008 Paris (FR)
(72) Inventor: Lelong-Gilbert, Anne-Gaelle, 78220 Viroflay (FR)
(74) Representative: Lamoureux, Bernard

(57) **Abstract**

A system for enabling a subscriber to determine the current mode of use of a mobile telephone terminal (11-2). The subscriber selects a subscriber profile according to a technical characteristic of the mobile telephone terminal (11-2). The user sends a request signal to an administration means (11-3) of a radiocommunication system. The administrator (11-3) returns the mode of use selected by the user, via software and hardware interfaces.

## Description

### OBJECT OF THE INVENTION

The present invention relates to a radiocommunication system and, more particularly, to a method and system for managing information of different profiles for a same subscriber portable telephone terminal.

### STATE OF THE ART

A subscriber to a radiocommunication system has the facility to define various operating modes for his mobile terminal. Said operating modes or subscriber profiles are stored in a base position register of the radiocommunication system.

The radiocommunication system has administration means for carrying out the allocation of a determined subscriber profile for a geographical location of the subscriber terminal. The allocation of a determined subscriber profile is carried out on the basis of the geographical location where the subscriber terminal is situated.

Consequently, the mobile terminal has means for communicating its geographical position (namely latitude, longitude and altitude) to the administration means. As a function of said geographical position, the administration means allocates to the mobile terminal the subscriber profile corresponding to the geographical location of the subscriber terminal.

A state of the art solution that describes a radiocommunication system the coverage area of which is divided into various cells and that permits changing of subscriber profile is known from U.S. Patent No. 5,568,153 to Bélieau, included in this patent application through reference.

This radiocommunication system has a base position register in which are stored geographical coordinates of base positions for the subscriber and has means for defining personal areas of base positions centred on the base positions of the subscriber.

The system also has means for determining the current geographical position of the subscriber, for the purpose of determining whether the current geographical position of the subscriber is situated within a defined personal area of base positions.

The system has means for establishing the characteristic parameters of the service used by the subscriber within a personal area of base positions determined by the geographical location, and means for establishing the characteristic parameters of the service when the subscriber is outside the personal area of base positions.

The state of the art mentioned has, among others, the drawbacks that the subscriber profile is associated with the geographical location of the subscriber terminal and is not related with the technical characteristics of the subscriber terminal.

As a result, in the event of breakdown of the geographical location system, the radiocommunication system is unable to offer the adequate subscriber profile associated with the current geographical location of the mobile subscriber terminal and, consequently, the subscriber is unable to make use of the subscriber profile defined for said geographical location.

It is therefore necessary to develop a method for managing the subscriber profiles of the users based on the technical characteristics and on programming capability of the subscriber terminal and of the radiocommunication system with which it is associated.

### CHARACTERISATION OF THE INVENTION

This invention is intended for overcoming this problem and other drawbacks in the state of the art. According to the invention, a radiocommunication system performs the allocation of a subscriber profile to a mobile terminal of a user on the basis of at least one characteristic of said mobile terminal.

The radiocommunication system employs for it information sent by the subscriber via his mobile terminal to an administrator system. In brief, a user is able to choose between various subscriber profiles defined for the mobile terminal associated therewith. Said subscriber profiles have been defined by the subscriber and stored in the administrator system.

The selection of a determined subscriber profile is carried out by the subscriber by sending a first signal to a fixed unit within the coverage area of which the mobile terminal is found.

The subscriber is able to employ the different subscriber profiles stored by the administrator system within the same coverage area, but not simultaneously.

An object of the present invention is to provide a method for managing a plurality of subscriber profiles on the basis of the technical characteristics of a mobile subscriber terminal.

The profiles for a subscriber are stored in an administrator means.

### BRIEF DESCRIPTION OF THE FIGURES

A more detailed explanation of the invention is given in the following description, based on the figures attached, in which:

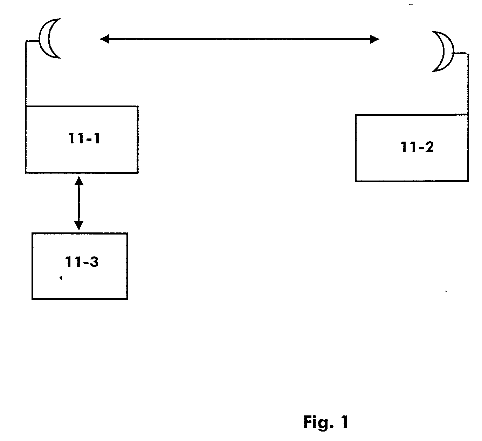

- figure 1 is a block diagram of a first control means of a fixed unit and a mobile telephone terminal in a radiocommunication system according to the invention.

### DESCRIPTION OF THE INVENTION

Referring to figure 1, a fixed unit 11-1 includes a first transmitter means, a first receiver means, and a first control means. The latter realizes, among other functions, a fixed unit controls function and a communication function with administration means 11-3 of the radiocommunication system. The administrator 11-3 is capable of storing a plurality of modes of use (subscriber profiles) defined by each user for mobile telephone terminal 11-2.

The mobile telephone terminal 11-2 includes a second transmitter means, a second receiver means, and a second control means as well. The second controller produces an output signal to first controller and receives output signals from it. The second controller maintains a mode of use and times the occurrence of an incoming administration signal in relation to the mode use. The results of requests are sent to the first control means, which in turn provides new parameters for the mode of use.

In addition, the administrator 11-3 receives requests from the second controller and informs the first controller and the second controller about the mode use requested by the user.

Thus, a subscriber is able to define various modes of use for a particular mobile telephone terminal 11-2. While the user defines the different modes of use, each one of these modes incorporates the particular functions of the mobile telephone terminal 11-2. Hence, said subscriber has available each mode of use according to his requirements.

In an embodiment, the administrator 11-3 such as a general home location register HLR of subscribers is capable of storing the different modes of use defined by each subscriber for his mobile terminal or terminals 11-2. The HLR is connected to the second controller through the first controller over radio links.

Each subscriber defines for his mobile terminal 11-3 a set of subscriber profiles, so that he is able to employ the various modes of use that he has defined earlier, at his convenience.

Thus, when the subscriber is located in a determined position of the coverage area and as a function of his present requirements, he may decide to change the mode of use of his mobile terminal 11-2. To carry this out, the subscriber, via the mobile terminal 11-2, sends a mode of use request signal to the administrator means 11-3.

Once that said signal has been received by the administrator means 11-3, the latter looks up a table that is associated with said mobile terminal 11-2, in which the administrator means 11-3 has stored the different modes of use that have been defined by the subscriber beforehand.

The aforementioned exploration finalises once the signal received has been associated with a mode of use. Next, the administrator means 11-3 answers the user request by sending the mode of use requested by the subscriber.

The subscriber terminal 11-2 receives a list, for example in the form of a menu, of the functions allocated to the mode of use requested, and that it is capable of carrying out.

In the course of the day, the subscriber travels from one location to another and/or find himself in different environments such as the office, at home, or others. In each one of these environments, the subscriber finds he has different requirements. By means of the invention, the mobile terminal 11-2, with the collaboration of the radiocommunication system, tries to adapt insofar as it can to the needs of the user in a speedy and effective manner.

On the basis of the subscriber requirements, when the subscriber wishes to obtain a determined service or a plurality of services that the mobile terminal 11-2 offers in association with the radiocommunication system, the subscriber sends a signal to the administrator means 11-3, which answers once it has received said signal.

The mobile terminal 11-2 is capable of storing the list of functions associated with a determined mode of use requested in a storage means (namely a memory) and/or in a subscriber identification module SIM or other similar module of the second controller 11-2.

In other embodiment, the fixed unit 11-1 includes the administrator 11-3.

## Claims

1. **System for managing a user profile in a radiocommunication system** between an administrator means (11-3) and at least one mobile telephone terminal(11-2); **characterised in that** said administrator means (11-3) is adapter to allocate the subscriber profile according to at least one technical characteristic of the mobile telephone terminal(11-2).

2. **System for managing a user profile** according to claim 1; **characterised in that** the administrator means (11-3) is adapter to return the subscriber profile selected as a menu containing the functions requested, in response to a request signal previously sent from a second control means of said mobile telephone terminal (11-2).

3. **System for managing a user profile** according to claim 2; **characterised in that** said second control means is adapter to define subscriber profiles such that each of them is associated to at least one technical characteristic of the mobile telephone terminal (11-2).

4. **System for managing a user profile** according to claim 3; **characterised in that** said administrator means (11-3) is adapter to store said subscriber profiles receives from the mobile telephone terminal (11-2).

5. **Fixed unit** according to any preceding claim; **characterised in that** said fixed unit 11-1 includes the administrator means (11-3).

6. **Mobile telephone terminal** according to any preceding claim; **characterised in that** said second control means is adapter to store said subscriber profiles receives from the administrator means (11-3).
